# FASCICULE DE BREVET EUROPEEN

(11) **EP 0 592 275 B1**
(45) Date de publication et mention de la délivrance du brevet: **29.01.1997**
(21) Numéro de dépôt: 93402348.2
(22) Date de dépôt: 27.09.1993
(51) Int. Cl.: B22D 21/00, C04B 35/03

(54) **Composition pour l'obtention de produits à base de chaux pure, application de cette composition et procédé pour sa mise en oeuvre**
Zusammensetzung zur Herstellung von Produkten aus reinem Kalk, sowie Anwendung und Anwendungsmethode
Compostion for the preparation of products based on pure lime, use of this composition and method of application

(30) Priorité: 01.10.1992 FR 9211650
(43) Date de publication de la demande: 13.04.1994
(73) Titulaire: INSTITUT NATIONAL DES SCIENCES APPLIQUEES DE RENNES, F-35043 Rennes Cedex (FR); MICROSTEEL S.A., F-35770 Vern sur Seiche (FR)
(72) Inventeur: Debuigne, Jean, F-35135 Chantepie (FR); Prigent, Serge, F-35000 Rennes (FR)
(74) Mandataire: Hammond, William

(56) Documents cités:
- FR-A- 2 292 686
- GB-A- 699 089
- DATABASE WPI Week 8520, Derwent Publications Ltd., London, GB; AN 85-119978 & JP-A-60 060 968 (HITACHI CHEMICAL KK)
- DATABASE WPI Week 9216, Derwent Publications Ltd., London, GB; AN 92-129497 & JP-A-4 075 744 (MITSUBISHI MATERIALS KK)
- DATABASE WPI Week 8321, Derwent Publications Ltd., London, GB; AN 83-50400K & JP-A-58 064 282 (KAWASAKI,ET AL.)
- DATABASE WPI Week 7812, Derwent Publications Ltd., London, GB; AN 78-22715A & JP-A-53 014 617 (HITACHI KK)
- DATABASE WPI Week 8621, Derwent Publications Ltd., London, GB; AN 86-135109 & JP-A-61 072 678 (SUMITOMO)

## Description

La présente invention concerne une composition pour l'obtention de produits à base de chaux pure, ainsi qu'une application de cette composition et qu'un procédé pour sa mise en oeuvre.

On sait que l'on a déjà proposé d'utiliser de la chaux, c'est-à-dire du monoxyde de calcium ou CaO, comme paroi interne de moules ou de creusets de fonderie destinés au moulage du titane et de ses alliages, et l'on peut se référer à ce sujet, par exemple, à l'article de T. Degawa, K. Kamata et Y. Yoneda, "Melting and precision casting of pure titanium using calcia", 6ème Conférence mondiale sur le titane, vol. II, 1988, Cannes (France), pages 707 à 713.

L'inconvénient de l'utilisation de la chaux pour une telle application est que ce produit est hygroscopique et très difficile à fritter, le frittage devant s'effectuer, soit à une température très élevée, soit en admettant un ajout de silice ou de phosphate qui permet certes aux grains de se lier entre eux, mais qui conduit à une contamination superficielle du titane par le silicium et l'oxygène, ce qui oblige à son tour à décaper chimiquement les pièces à leur sortie du moule. Des inconvénients analogues se présentent lorsqu'il s'agit d'élaborer des pièces massives en chaux pure. Par ailleurs, les mêmes problèmes se posent pour les autres métaux qui appartiennent au même groupe que le titane dans le tableau périodique des éléments, à savoir le zirconium et le hafnium, ainsi que pour les métaux du groupe V, c'est-à-dire le vanadium, le niobium et le tantale.

Aussi l'un des buts de la présente invention est-il de proposer une composition qui permette d'élaborer des produits en chaux pure, et notamment des couches internes de moules ou de creusets destinées à venir en contact avec un métal fondu choisi parmi les métaux des groupes IV et V du tableau périodique des éléments et leurs alliages, et qui soit exempte des inconvénients rappelés ci-dessus des compositions connues.

Un autre but est de fournir une composition de ce genre qui soit économique et facile à mettre en oeuvre, et qui permette en particulier d'obtenir des moules dont la fabrication n'entraîne pas un retrait important susceptible de rompre le moule et/ou de conduire à des variations dimensionnelles incompatibles avec un moulage de précision, et dont le démoulage soit aisé.

Selon l'invention, ces buts, ainsi que d'autres qui apparaîtront par la suite, comme celui visant à obtenir une grande souplesse d'utilisation, d'une part, et, d'autre part, une absence totale de toxicité et de problèmes liés aux rejets industriels, sont atteints grâce à une composition qui est caractérisée par le fait qu'elle contient de la chaux électrofondue et au moins un polyol dans un milieu anhydre.

Il s'est avéré, d'une manière surprenante, que cette composition, après un séchage et un frittage, fournit des corps en chaux dont la pureté est celle de la chaux électrofondue de départ. Lorsqu'elle est utilisée pour former des couches internes de moules de fonderie ou pour fabriquer des creusets, ces couches et ces creusets peuvent venir en contact avec du titane fondu, ou avec d'autres métaux fondus des groupes IV et V du tableau périodique des éléments, ou avec des alliages à base de ces métaux, sans qu'il en résulte une contamination notable du métal. L'absence d'adhérence du titane au moule ou au creuset permet d'obtenir des pièces présentant un excellent état de surface. Par ailleurs, les propriétés de la composition selon l'invention autorisent un préchauffage important du moule, ce qui est très favorable en vue de l'obtention par moulage de petites pièces et de voiles minces avec ou sans centrifugation.

Sans que l'on soit lié en aucune manière par une quelconque théorie, on pense que les effets avantageux de la composition selon la présente invention résultent, en particulier, de la formation d'un alcoxyde solide par réaction du polyol avec la chaux, ce qui provoque un phénomène de prise lors du séchage.

Avantageusement, le polyol qui est présent dans la composition selon l'invention est un trialcool ou un dialcool liquide à la température ambiante, et, de préférence, il est choisi dans le groupe comprenant le glycérol et l'éthylèneglycol qui présentent des avantages quant à leur coût et à leur disponibilité.

Il est avantageux que ce polyol soit présent dans la composition selon l'invention à raison de 1 à 20% en volume du milieu anhydre et, de préférence, à raison de 10% environ en volume de celui-ci.

En ce qui concerne le milieu anhydre précité, il est avantageusement constitué par un monoalcool liquide à la température ambiante et, de préférence, par du propanol dont la vitesse d'évaporation est favorable, puisqu'elle conduit à une faible durée pour le séchage évoqué plus haut.

Quant à la chaux électrofondue que contient la composition selon l'invention, elle est avantageusement utilisée à raison de 0,5 à 3 kg par litre de milieu anhydre, sa granulométrie étant de préférence comprise entre 50 et 2.000 µm. Cette granulométrie doit être choisie en fonction de l'utilisation précise que l'on envisage, et elle conditionne notamment l'état de surface des couches destinées à venir en contact avec du métal fondu.

Lorsque l'on utilise la composition selon l'invention pour revêtir un moule de fonderie d'une couche intérieure destinée à venir en contact avec du titane fondu, par exemple, on applique la composition liquide par un procédé d'enduction approprié, on laisse sécher pendant une heure au moins à la température ambiante, on applique éventuellement une ou plusieurs autres couches, en fonction de l'épaisseur finale qui est techniquement utile, chaque couche faisant l'objet d'un séchage pendant une heure au moins à la température ambiante, et on soumet ensuite le tout pendant une heure au moins à une température de frittage comprise entre 800 et 1.500°C.

S'il s'agit de fabriquer un creuset, les couches de la composition selon l'invention sont appliquées sur un modèle en cire perdue, par exemple par simple trempage, et c'est après le séchage qui donne déjà une consistance suffisante à la pièce, pour les raisons évoquées plus haut, que l'on procède au décirage éclair à une température comprise entre 900 et 1.100°C. Cette opération est suivie par le frittage spécifié plus haut.

C'est lors du décirage que l'on observe une décomposition par oxydation de l'alcoxyde qui est formé par réaction de la chaux avec le polyol, comme on l'a indiqué plus haut, cependant qu'un préfrittage se produit en même temps. La morphologie du CaO qui est alors formé permet un frittage à une température de 1.450°C seulement, ce qui conduit à une céramique en chaux dont la pureté correspond à celle de la chaux électrofondue de départ.

On notera encore que l'on peut incorporer à la composition selon l'invention diverses charges comme de la silice, de la magnésie, de l'alumine, de la thorine, de l'oxyde d'yttrium, de la zircone ou des solutions solides stabilisées à base de zircone. On peut ainsi obtenir des pièces céramiques creuses ou massives qui ont été frittées à une température nettement plus basse que si l'on avait fait appel aux procédés connus. Le phénomène de prise déjà signalé permet des mises en forme particulièrement aisées et économiques pour de nombreux objets techniques.

Enfin, pour constituer des moules, il est toujours possible d'utiliser des couches de renfort en utilisant les procédés classiques de préparation de moules destinés à la méthode à la cire perdue, en opérant dans des bains anhydres.

Quant au démoulage, il est particulièrement aisé, puisqu'il suffit de procéder à une hydrolyse pour détruire le moule, sans qu'il soit nécessaire de recourir aux procédés classiques, comme le grenaillage ou le sablage par exemple. En effet, l'action de l'eau à la température ambiante sur la chaux du moule provoque une désagrégation de celui-ci, sans déformation ou altération de la surface des pièces moulées.

Dans ce qui suit, on décrit un exemple de mise en oeuvre de la composition selon l'invention pour la fabrication de creusets dans lesquels doit être coulé du titane fondu.

On ajoute à 25 litres de propanol-2 35 kg de chaux électrofondue d'une granulométrie inférieure à 50 µm et 2,5 litres de glycérol.

On confectionne un modèle en cire que l'on fait tremper dans cette composition pendant 15 secondes, après quoi on procède à un sablage au moyen de chaux d'une granulométrie comprise entre 200 et 500 µm, et on laisse sécher pendant deux heures à la température ambiante.

On applique ensuite une deuxième couche par trempage dans la composition pendant 5 secondes. Le sablage est réalisé au moyen d'une chaux dont la granulométrie est située entre 0,5 et 1 mm, et la durée du séchage est également de deux heures.

Pour finir, on applique une troisième couche avec des conditions opératoires identiques celles de la deuxième couche.

L'ensemble est soumis à un décirage éclair dans un Pour à 1.000°C environ suivi d'un frittage de deux heures environ à une température voisine de 1.450°C.

On a procédé à des essais de coulée de titane dans des creusets ainsi obtenus et préchauffés à 1.200°C. Les creusets sont maintenus à cette température pendant dix minutes environ après la coulée du métal, puis on les laisse se refroidir librement sous argon purifié. On obtient des éprouvettes qui ne présentent aucune phase α en surface et dont la dureté Vickers ne témoigne d'aucune contamination.

## Revendications

1. Composition pour l'obtention de produits à base de chaux pure, caractérisée par le fait qu'elle contient de la chaux électrofondue et une phase organique constituée exclusivement par au moins un polyol dans un milieu anhydre.

2. Composition selon la revendication 1, caractérisée par le fait que ledit polyol est un trialcool ou un dialcool liquide à la température ambiante.

3. Composition selon l'une quelconque des revendications 1 et 2, caractérisée par le fait que ledit polyol est choisi dans le groupe comprenant le glycérol et l'éthylène-glycol.

4. Composition selon l'une quelconque des revendications 1 à 3, caractérisée par le fait que ledit polyol y est présent à raison de 1 à 20% en volume dudit milieu anhydre, et, de préférence, à raison d'environ 10% en volume dudit milieu anhydre.

5. Composition selon l'une quelconque des revendications 1 à 4, caractérisée par le fait que ledit milieu anhydre est constitué par un monoalcool.

6. Composition selon la revendication 5, caractérisée par le fait que ledit monoalcool est du propanol.

7. Composition selon l'une quelconque des revendications 1 à 6, caractérisée par le fait que ladite chaux électrofondue y est contenue à raison de 0,5 à 3 kg par litre de milieu anhydre.

8. Composition selon l'une quelconque des revendications 1 à 7, caractérisée par le fait que la granulométrie de ladite chaux électrofondue est comprise entre 50 et 2.000 um.

9. Composition selon l'une quelconque des revendications 1 à 8, caractérisée par le fait qu'elle comprend en outre au moins une charge, en particulier à base de zircone.

10. Application de la composition selon l'une quelconque des revendications 1 à 9 à l'élaboration de la couche interne au moins de moules de fonderie et de creusets destinés à venir en contact avec un métal fondu choisi parmi les métaux des groupes IV et V du tableau périodique des éléments et leurs alliages.

11. Application selon la revendication 10, caractérisée par le fait qu'elle fait appel à des couches de renfort.

12. Procédé pour la mise en oeuvre de la composition selon l'une quelconque des revendications 1 à 9, caractérisée par le fait que l'on fait sécher ladite composition pendant une heure au moins après un sablage éventuel, et qu'on la soumet ensuite pendant une heure au moins à une température de frittage comprise entre 800 et 1.500°C, et par le fait que, dans le cas de l'application selon la revendication 9, ladite composition est appliquée sur un modèle perdu et que ledit frittage est précédé par un décirage éclair à une température comprise entre 900 et 1.100°C.

13. Procédé selon la revendication 12, caractérisé par le fait qu'il comprend une phase ultime de désagrégation par hydrolyse du produit obtenu.

## Claims

1. A composition for obtaining products based on pure lime, characterised in that it contains electrically melted lime and an organic phase consisting exclusively of at least one polyhydric alcohol in an anhydrous medium.

2. A composition according to claim 1, characterised in that the polyhydric alcohol is a tri-alcohol or di-alcohol liquid at ambient temperature.

3. A composition according to claims 1 and 2, characterised in that the polyhydric alcohol is chosen from the group comprising glycerol and ethylene glycol.

4. A composition according to any one of claims 1 to 3, characterised in that the polyhydric alcohol therein is present in the proportion of 1 to 20% by volume of the anhydrous medium, preferably in the proportion of about 10% by volume of the anhydrous medium.

5. A composition according to any one of claims 1 to 4, characterised in that the anhydrous medium is a mono-alcohol.

6. A composition according to claim 5, characterised in that the mono-alcohol is propanol.

7. A composition according to any one of claims 1 to 6, characterised in that the electrically melted lime is present therein in the proportion of 0.5 to 3 kg per litre of anhydrous medium.

8. A composition according to any one of claims 1 to 7, characterised in that the particle size of the electrically melted lime is between 50 and 2000 µm.

9. A composition according to any one of claims 1 to 8, characterised in that it also comprises at least one filler, more particularly based on zirconia.

10. The application of a composition according to any one of claims 1 to 9 to the preparation of at least the inner layer of foundry moulds and crucibles for bringing into contact with a molten metal chosen from among the metals in groups IV and V of the periodic table of elements and alloys thereof.

11. The application according to claim 10, characterised in that use is made of reinforcing layers.

12. A method of applying a composition according to any one of claims 1 to 9, characterised in that the composition is dried for at least 1 hour after sand-blasting if required and is then subjected for at least an hour to a sintering temperature between 800 and 1500° C, and in the case of application according to claim 9, the composition is applied to a lost-wax model and the said sintering is preceded by lightning dewaxing at a temperature between 900 and 1100° C.

13. A method according to claim 12, characterised in that it comprises a final phase of disintegration by hydrolysis of the product obtained.

## Patentansprüche

1. Zusammensetzung zum Erzeugen von Produkten auf der Grundlage von reinem Kalk, dadurch gekennzeichnet, daß sie elektrogeschmolzenen Kalk und eine organische Phase enthält, die ausschließlich aus wenigstens einem Polyalkohol in einem wasserfreien Milieu besteht.

2. Zusammensetzung nach Anspruch 1, dadurch gekennzeichnet, daß der Polyalkohol ein dreiwertiger Alkohol oder ein zweiwertiger Alkohol ist, der bei Raumtemperatur flüssig ist.

3. Zusammensetzung nach einem der Ansprüche 1 und 2, dadurch gekennzeichnet, daß der Polyalkohol aus der Gruppe gewählt ist, die Glycerin und Ethylenglycol umfaßt.

4. Zusammensetzung nach einem der Ansprüche 1 bis 3, dadurch gekennzeichnet, daß der Polyalkohol in einem Anteil von 1 bis 20 Volumen-% des wasserfreien Milieus und vorzugsweise in einem Anteil von etwa 10 Volumen-% des wasserfreien Milieus vorhanden ist.

5. Zusammensetzung nach einem der Ansprüche 1 bis 4, dadurch gekennzeichnet, daß das wasserfreie Milieu aus einem einwertigen Alkohol besteht.

6. Zusammensetzung nach Anspruch 5, dadurch gekennzeichnet, daß der einwertige Alkohol Propylalkohol ist.

7. Zusammensetzung nach einem der Ansprüche 1 bis 6, dadurch gekennzeichnet, daß der elektrogeschmolzene Kalk in einem Anteil von 0,5 bis 3 kg pro Liter des wasserfreien Milieus enthalten ist.

8. Zusammensetzung nach einem der Ansprüche 1 bis 7, dadurch gekennzeichnet, daß die Granulometrie des elektrogeschmolzenen Kalkes zwischen 50 und 2000 µm liegt.

9. Zusammensetzung nach einem der Ansprüche 1 bis 8, dadurch gekennzeichnet, daß sie zusätzlich wenigstens einen Füllstoff, insbesondere auf der Grundlage von Zirkon enthält.

10. Verwendung der Zusammensetzung nach einem der Ansprüche 1 bis 9 zum Ausbilden einer Innenbeschichtung wenigstens von Gießformen und Tiegeln, die dazu bestimmt sind, mit einem Gießmetall, das aus den Metallen der Gruppen IV und V des periodischen Systems der Elemente gewählt ist, oder dessen Legierungen zu kommen.

11. Verwendung nach Anspruch 10, dadurch gekennzeichnet, daß sie auf Verstärkungsbeschichtungen angewandt wird.

12. Verfahren zum Einsetzen der Zusammensetzung nach einem der Ansprüche 1 bis 9, dadurch gekennzeichnet, daß man die Zusammensetzung nach gegegebenenfalls einem Sandstrahlen über wenigstens eine Stunde trocknen läßt und daß man sie dann über wenigstens eine Stunde einer Frittierungstemperatur zwischen 800 und 1500°C aussetzt und daß im Fall der Verwendung nach Anspruch 9 die Zusammensetzung auf ein verlorenes Modell aufgebracht wird und dem Frittieren ein Schnellentwachsen auf einer Temperatur zwischen 900 und 1100°C vorausgeht.

13. Verfahren nach Anspruch 12, dadurch gekennzeichnet, daß es eine abschließende Phase der Auflösung des erhaltenen Produktes durch Hydrolyse umfaßt.
